# EUROPÄISCHE PATENTSCHRIFT

(11) **EP 2 060 460 B1**
(45) Veröffentlichungstag und Bekanntmachung des Hinweises auf die Patenterteilung: **06.04.2016**
(21) Anmeldenummer: 08019881.5
(22) Anmeldetag: 14.11.2008
(51) Int. Cl.: B60T 15/18, B60T 15/50, B60T 11/34, F16K 17/00

(54) **Überdruckablaßventil für druckluftgebremste Schienenfahrzeuge**
Pressure relieve valve for railway air pressure brakes
Soupape de surpression pour véhicules ferroviaires avec frein à air comprimé

(30) Priorität: 16.11.2007 DE 102007054760
(43) Veröffentlichungstag der Anmeldung: 20.05.2009
(73) Patentinhaber: KNORR-BREMSE Systeme für Schienenfahrzeuge GmbH, 80809 München (DE)
(72) Erfinder: De Felipe, Rafael, 45593 Bargas (Toledo) (ES)
(74) Vertreter: Mattusch, Gundula

(56) Entgegenhaltungen:
- EP-A1- 1 595 764

## Beschreibung

Die Erfindung betrifft ein Überdruckablaßventil für druckluftgebremste Schienenfahrzeuge.

Dokument EP 1 595 764 A1 offenbart ein Überdruckablaßventil gemäß dem Oberbegriff des Anspruchs 1.

Druckluftgebremste Schienenfahrzeuge haben üblicherweise eine Füllstoß- oder Schnellöse-Einrichtung, um eine Hauptluftleitung zum Lösen der Bremse rasch auf einen Betriebsdruck zu bringen, was vor allem bei langen Zügen problematisch ist. Die Füllstoßfunktion wird über ein auf der Lokomotive angeordnetes Führerbremsventil und ein über einen Steuerdruck beeinflußbares Relaisventil eingeleitet, wobei eine unmittelbare Verbindung zwischen einem Hauptluftbehälter und der Hauptluftleitung besteht (vgl. DE-AS 2018907).

Bei der Füllstoßfunktion wird die Hauptluftleitung des Zuges und damit auch eine Verteilersteuerkammer in jedem Wagen des Zuges "überladen", d.h. mit einem Druck beaufschlagt, der über dem Regel-Betriebsdruck liegt. Üblicherweise liegt der Regel-Betriebsdruck bei 5,0 bar, während beim Füllstoß ein Druck bis 5,4 bar zugelassen ist.

Beim Füllstoß sind folgende Faktoren zu berücksichtigen:
1. Die vorhergehende Bremsstufe, von der aus der Füllstoß eingeleitet wird;
2. Dauer des Füllstoßes; je länger die Dauer, desto höher das Risiko einer Überladung;
3. erreichter Druckwert während des Füllstoßes.

Nach dem Füllstoß, bei welchem die Hauptluftleitung einen höheren Druck als den Regelbetriebsdruck (z.B. 5,0 bar) aufweist, wird vom Führerbremsventil eine Angleichphase eingeleitet, in welcher der Überdruck in der Hauptluftleitung so langsam auf den Regelbetriebsdruck abgesenkt wird, daß die Bremsen nicht ansprechen (DE 19931163). Bei langen Zügen kann diese Angleichphase sehr lange dauern, in welcher in der Hauptluftleitung ein unzulässiger Überdruck herrscht.

Während des Füllstoßes treten im Führerbremsventil gleichzeitig zwei Vorgänge auf:
a) Die von der UIC vorgeschriebene Begrenzung für den Zugriff zum Führerbremsventil ist aufgehoben, damit der Druck das letzte Fahrzeug des Zuges schneller erreicht;
b) die Hauptluftleitung wird mit einem Druck über den Regelbetriebsdruck beaufschlagt, der gleich dem Druck im Hauptluftleitungshauptreservoir sein kann, entsprechend den vom Lokomotiven-Bremssteuersystem auferlegten Beschränkungen.

Bei den oben beschriebenen Problemen und unter Berücksichtigung, daß der Zug mit permanent aktivierter Überladungsfunktion betrieben werden kann, d.h. der Druck kann zwischen 5,4 bar (vollständig gelöste Bremse) und 3,9 bar (maximale Betriebsbremsung) liegen, wird eine Überladungsbegrenzung vorgeschlagen, die mit der normalen Betriebsfunktion kompatibel ist.

Die DE 10354248 B4 beschreibt ein Druckbegrenzungsventil, welches den Vorratsdruck für eine einen Bremsdruck für wenigstens einen druckmittelbetätigten Bremszylinder eines Schienenfahrzeugs aussteuernde Steuerventilanordnung betrifft. Eine Begrenzung des Druckes bei dem Füllstoß der Hauptluftleitung ist damit nicht möglich.

Auch die DE 3327888 A1 beschreibt ein Steuerventil für Druckluftbremsen von Schienenfahrzeugen mit einer Höchstdruckbegrenzungseinrichtung für den einen Bremszylinder zuzuführenden Druck.

Ebenso beschreibt die DE-PS-2425309 ein Dreidrucksteuerventil mit Druckbegrenzung für Druckluftbremszylinder von Schienenfahrzeugen.

Die vorliegende Erfindung geht von dem Problem aus, daß bei dem allgemein bekannten Knorr Steuerventil KE zum Lösen der Bremsen eines Zuges ein Füllstoß über die Hauptluftleitung des Zuges von der Lokomotive zu den einzelnen Wagen gebracht wird. In einer Steuerkammer dieses bekannten Ventiles wird der Bremsreferenzdruck akkumuliert.

Dabei ist aber nicht sichergestellt, daß eine Überladung, d.h. ein zu hoher Druck, eingesteuert wird.

Aufgabe der Erfindung ist es daher, eine Überladung an Bremssteuergeräten einzelner Wagen eines Zuges wirksam zu verhindern, auch wenn beispielsweise während eines Füllstoßes der Druck der Hauptluftleitung eines Zuges unzulässig hohe Werte erreicht.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.
Die Erfindung verwendet Überdruckablaßventile, die in den Verteilersteuerkammern der einzelnen Wagen angebracht sind und dort den Druck auf einen Druck regeln, der mit der Überladungsfunktion der Lokomotive kompatibel ist. Dieses Überdruckablaßventil ist ständig aktiv und regelt den Druck auf einen vorgegebenen Wert, der üblicherweise bei 5,4 bar liegt derart, daß unabhängig vom Füllstoßdruck der Druck in der Verteilersteuerkammer niemals über diesen vorgegebenen Wert (von 5,4 bar) ansteigt, also nicht höher ist als ein Überdruck, der mittels der Überladungsfunktion der Lokomotive im Angleichvorgang eliminiert werden kann.

Bei der Erfindung wird also sozusagen ein kontrolliertes Leck verwendet, das durch einen oder mehrere weiter unten beschriebene Kolben druckabhängig wirksam geschaltet wird und damit einen kontrollierten Druckabbau eines Überdruckes ermöglicht. Der kontrollierte Druckabbau eines unzulässigen Überdrucks bezieht sich somit auf Druckänderung pro Zeiteinheit und ist durch eine kalibrierte Strömungsbegrenzungs-Öffnung festgelegt, wobei die Aktivierung druckabhängig erfolgt durch mindestens eine einstellbare Feder, die auf einen oder indirekt mehrere Kolben wirkt, auf den oder die der zu überwachende Druck wirkt.

Das Überdruckablaßventil nach der Erfindung hat einen Kopf mit einem Gewinde und kann als Zusatzbauteil direkt an oder in die entsprechende Steuerkammer des einen einzelnen Wagens des Zuges befindlichen Steuerventils angeschraubt werden.

Die zulässigen bzw. einzuregelnden Druckwerte werden werksseitig vorgegeben (entsprechend Forderungen der UIC), so daß beim Einbau und späteren Betrieb keine Einstellungen vorgenommen werden müssen.

Generell hat das Überdruckablaßventil nach der Erfindung ein Gehäuse mit einer Einlaßöffnung und einer Auslaßöffnung. Ein erster beweglicher Kolben weist einen ersten Ventilsitz auf, der zwischen einer ersten Kammer und einer zweiten Kammer liegt und diese miteinander verbindet bzw. voneinander trennt.

Ein zweiter beweglicher Kolben ist in einer dritten Kammer angeordnet und weist eine mittige Bohrung auf, die mit einer Kolbenstange des ersten Kolbens einen zweiten Ventilsitz bildet, wobei diese Bohrung mit der Auslaßöffnung des Gehäuses in direkter oder indirekter Strömungsverbindung steht. Der zweite Kolben wird durch mindestens eine Feder in Schließstellung des zweiten Ventilsitzes vorgespannt. Die zweite Kammer und die dritte Kammer stehen in Strömungsverbindung miteinander, wobei eine Kolbenfläche des zweiten Kolbens mit dem in der zweiten und der dritten Kammer herrschenden Druck beaufschlagt ist. Der erste Ventilsitz ist durch eine als Bypass wirkende kalibrierte Strömungsbegrenzungs-Öffnung überbrückt, so daß bei geschlossenem ersten Ventilsitz die erste und die zweite Kammer über diese kalibrierte Strömungsbegrenzungs-Öffnung miteinander in Verbindung stehen und ein Druckausgleich zwischen diesen beiden Kammern nur kontrolliert stattfinden kann. Einerseits kann somit bei einem Druckanstieg in der ersten Kammer, die unmittelbar mit der Einlaßöffnung verbunden ist, nur verlangsamt in die zweite und dritte Kammer geleitet werden und umgekehrt kann bei einer Druckabsenkung in der zweiten und dritten Kammer der Druck in der ersten Kammer und damit auch der zu überwachenden Verteilersteuerkammer nur langsam und kontrolliert absinken.

Vorzugsweise ist die den zweiten Kolben beaufschlagende mindestens eine Feder in einem einstellbaren Federlager abgestützt. Diese Einstellung erfolgt in einfacher Weise durch eine oder mehrere Unterlegscheiben und wird werkseitig vorgenommen.

Ebenfalls vorzugsweise ist der erste Kolben durch eine in einer vierten Kammer angeordnete Feder in Schließrichtung des ersten Ventilsitzes vorgespannt, wobei der erste Kolben und seine Kolbenstange eine durchgehende Bohrung haben, die die dritte Kammer mit der vierten Kammer verbindet, so daß im stationären Zustand der erste Kolben auf seinen beiden Kolbenflächen mit gleichem Druck beaufschlagt ist.

Um auch bei Fehlern des Überdruckablaßventiles sicherzustellen, daß über das Überdruckablaßventil nach der Erfindung der Druck nicht weiter als der Regelbetriebsdruck abgesenkt wird, sind verschiedene Sicherungsmaßnahmen vorgesehen. So ist vorgesehen, daß der zweite Kolben durch die mindestens eine Feder gegen einen Dichtring gedrückt wird und somit den Weg von der Einlaßöffnung zur Auslaßöffnung absperrt, auch wenn die normale Dichtung des zweiten Kolbens undicht sein sollte. Für den Fall, daß der zweite Ventilsitz undicht ist, sind ebenfalls Sicherungsmaßnahmen vorgesehen.

Nach einer Variante der Erfindung hat der zweite Kolben eine Kolbenstange, durch den sich die Bohrung des zweiten Kolbens hindurch erstreckt und in eine radiale Bohrung mündet, die Axialrichtung beidseitig jeweils Dichtungen aufweist. Diese Kolbenstange ist in einer Hülse geführt, die mindestens zwei in Axialrichtung versetzt angeordnete Öffnungen hat. Nur wenn die genannte radiale Bohrung der Kolbenstange mit einer dieser Öffnungen fluchtet, kann Druckluft von der dritten Kammer zur Auslaßöffnung gelangen.

Nach einer anderen Variante der Erfindung ist vor der Auslaßöffnung ein Absperrventil vorgesehen, das ab einem vorgegebenen Druck die Auslaßöffnung absperrt. Aufgrund des durch die kalibrierte Strömungsbegrenzungs-Öffnung begrenzten Druckanstieges kann im fehlerfreien Fall der Druck dort nicht so stark ansteigen, daß das Ventil schließt. Im Fehlerfall dagegen kann der Druck dort schneller ansteigen und schließt damit dieses Sicherheitsventil.

Nach der Erfindung wird dieses Überdruckablaßventil in jedem Verteiler eines Wagens installiert und begrenzt die Überladung auf einen Wert, der mit der Angleicherfunktion der Lokomotive kompatibel ist. Zusätzlich hat das Überdruckablaßventil eine Sicherung gegen Leckströme oberhalb eines vorgegebenen Wertes.

Nach diesem Vorschlag ist die an den Verteiler angebrachte Vorrichtung so konzipiert, daß das Risiko von Lecks, die die Bremsung aufgrund eines durch ein Leck ausgelösten Fehlers verursachen würde, verhindert.

Die Verhinderung einer Überladung über den zulässigen Grenzwert erfolgt durch das Überdruckablaßventil, also eine kontrollierte Entlüftung und hat darüber hinaus eine doppelte Schutzeinrichtung, die im Zusammenhang mit den Ausführungsbeispielen ausführlicher erläutert beschrieben wird.

Im folgenden wird die Erfindung anhand von Ausführungsbeispielen im Zusammenhang mit der Zeichnung ausführlicher beschrieben. Es zeigt:
- Fig. 1: Ein Überdruckablaßventil nach einem ersten Ausführungsbeispiel der Erfindung im Ruhezustand;
- Fig. 2: dasselbe Ventil in einem ersten Betriebszustand;
- Fig. 3: dasselbe Ventil in einem zweiten Betriebszustand,
- Fig. 4: ein zweites Ausführungsbeispiel eines Überdruckablaßventiles nach der Erfindung in einem ersten Betriebszustand; und
- Fig. 5: dasselbe Ventil in einem zweiten Betriebszustand

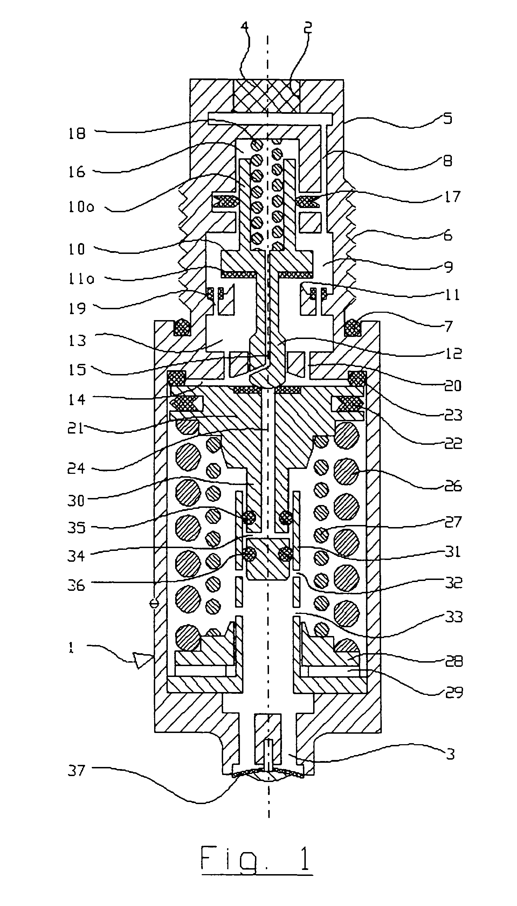

Zunächst wird auf das Ventil der Fig. 1 bis 3 Bezug genommen. Das Überdruckablaßventil der Fig. 1 bis 3 hat ein Gehäuse 1 mit einer Einlaßöffnung 2 und einer Auslaßöffnung 3. In der Einlaßöffnung 2 ist ein Filter 4 angeordnet. Das Gehäuse 1 hat einen Gehäusekopf 5, der mit einem Gewinde 6 versehen ist, über das der Kopf 5 in oder an die Steuerdruckkammer eines Druckverteilers der einzelnen Wagen eines Zuges einschraubbar ist, wobei eine Abdichtung durch einen O-Ring 7 erfolgt.

Von der genannten Druckverteilerkammer gelangt Druckluft über die Einlaßöffnung 2 in das Innere des Gehäuses 1 und zwar über einen Kanal 8 in eine erste Kammer 9, in welcher ein Kolben 10 verschieblich angeordnet ist. Die erste Kammer 9 ist durch einen ersten Ventilsitz 11 begrenzt, gegen den eine Dichtfläche 11a des Kolbens 10 zur Anlage kommen kann. Eine Kolbenstange 12 des Kolbens 10 ragt in eine zweite Kammer 13 und eine dritte Kammer 14. Die Kolbenstange 12 hat eine Bohrung 15, die sich durch die Kolbenstange 12 und den Kolben 10 hindurch erstreckt und in eine vierte Kammer 16 mündet, in welcher eine hohlzylindrische Verlängerung 10a des Kolbens 10 geführt ist. Diese vierte Kammer 16 ist durch eine Dichtung 17 gegenüber der ersten Kammer 9 abgedichtet. Sie enthält eine erste Feder 18, mittels der der Kolben 10 und die Kolbenstange 12 in Richtung eines Schließens des Ventilsitzes 11 vorgespannt sind.

Die erste Kammer 9 und die zweite Kammer 13 sind durch eine oder mehrere kalibrierte Strömungsbegrenzungs-Öffnungen 19 miteinander verbunden, so daß auch beim Anliegen des Kolbens 10 an den Ventilsitz 11 zwischen den beiden Kammern 9 und 13 eine Verbindung besteht, die als den Ventilsitz 11 überbrückender Bypass wirkt. Dieser Bypass begrenzt jedoch bei geschlossenem Ventilsitz 11 die Druckluftströmung von der ersten Kammer 9 zur zweiten Kammer 13, so daß Druckänderungen an der Einlaßöffnung 2 nur langsam bzw. zeitverzögert in der zweiten Kammer 13 ankommen. Die zweite Kammer 13 und die dritte Kammer 14 sind durch mindestens eine Öffnung 20 miteinander verbunden, wobei die Öffnung 20 größer ist als die kalibrierte Strömungsbegrenzungsöffnung 19, so daß die zweite (13) und dritte (14) Kammer weitestgehend identischen Druck und Druckverlauf haben.

Die Bohrung 15 des Kolbens 10 und der Kolbenstange 12 ist an dem in die dritte Kammer 14 hineinragenden Ende der Kolbenstange 12 abgewinkelt und tritt seitlich aus dem Ende der Kolbenstange 12 in die Kammer 14 ein. Über die Bohrung 15 stehen somit die dritte Kammer 14 und die vierte Kammer 16 miteinander in Verbindung, so daß im Ergebnis in den Kammern 14 und 16 derselbe Druck herrscht und somit beide Kolbenflächen des ersten Kolbens 10 im stationären Zustand mit demselben Druck beaufschlagt sind.

Das axiale Ende der Kolbenstange 12 ist abgerundet und liegt an einem in der dritten Kammer 14 verschieblich angeordneten zweiten Kolben 21 unter Bildung eines zweiten Ventilsitzes 25 an. Dieser Kolben 21 hat eine Dichtung 22, die längs der zylindrischen Innenwandung der dritten Kammer 14 dichtend gleitet. Das obere Ende der dritten Kammer 14 weist weiterhin einen O-Ring 23 auf, gegen den der zweite Kolben 21 in seiner oberen Grenzstellung zur Anlage kommt und der als zusätzliche Dichtung dient für den Fall, daß die Dichtung 22 defekt sein sollte.

Der zweite Kolben 21 hat eine mittige Bohrung 24 und einen diese umgebenden Ventilsitz 25, der zusammen mit dem abgerundeten axialen Ende der Kolbenstange 12 ein zweites Ventil bildet.

Der zweite Kolben 21 ist hier durch zwei Federn 26 und 27 in Richtung zu dem ersten Kolben 10 hin vorgespannt. Die beiden Federn 26 und 27 sind an ihrem dem zweiten Kolben 21 gegenüberliegenden Ende in einem einstellbaren Lager 28 abgestützt, wobei dieses Lager durch eine oder mehrere Unterlegscheiben 29 in seiner Position einstellbar ist, wodurch die Kraft der beiden Federn 26 und 27 werksseitig justiert wird.

Eine Kolbenstange 30 des zweiten Kolbens 21 ist in einer zylindrischen Hülse 31 verschieblich geführt, wobei diese Hülse 31 in Axialrichtung versetzt angeordnete Öffnungen 32 und 33 aufweist. Das Innere der Hülse 31 steht mit der Auslaßöffnung 3 in Verbindung.

Die Bohrung 24 des zweiten Kolbens 21 erstreckt sich auch durch die Kolbenstange 30, endet jedoch vor dem freien Ende der Kolbenstange 30 in mindestens eine radiale Bohrung 34, wobei beidseitig der mindestens einen radialen Bohrung 34 jeweils ein Dichtungsring 35 und 36 angeordnet ist.

Im Bereich der Auslaßöffnung 3 ist ein Rückschlagventil 37 in Form einer Membran angeordnet.

In Fig. 1 ist das Druckbegrenzungsventil in seiner Ruhestellung dargestellt. Der zweite Kolben 21 ist durch die beiden Federn 26 und 27 in seine obere Grenzstellung gebracht, in der er gegen den O-Ring 23 anliegt und in der sein Ventilsitz 25 gegen die Kolbenstange 12 drückt und den ersten Kolben 10 gegen die Kraft der ersten Feder 18 in die in Fig. 1 dargestellte Stellung drückt, in welcher der Ventilsitz 11 geöffnet ist.

An der Einlaßöffnung 2 liegt der zu überwachende Druck an, der über den Kanal 8 in die erste Kammer 9, über den geöffneten Ventilsitz 11 in die zweite Kammer 13 und über die Öffnung 20 in die dritte Kammer 14 gelangt und damit die Kolbenfläche des zweiten Kolbens 21 mit Druck beaufschlagt. Über die Bohrung 15 gelangt dieser Druck auch in die vierte Kammer 16.

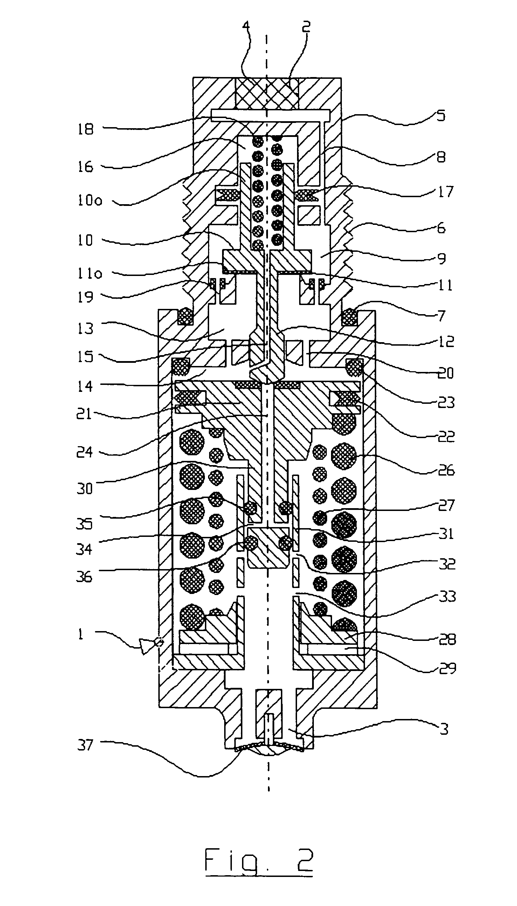

Sobald der in der dritten Kammer 14 auf die Kolbenfläche des zweiten Kolbens 21 wirkende Druck die Kraft der Federn 26 und 27 überwindet, bewegt sich der zweite Kolben 21 in Richtung zur Auslaßöffnung 3 und der erste Kolben 10 folgt aufgrund der ersten Feder 18 sowie dem in der vierten Kammer 16 herrschenden Druck dem zweiten Kolben 21 soweit, bis der erste Kolben 10 den Ventilsitz 11 schließt. Dieser Zustand ist in Fig. 2 dargestellt. Steigt der zu überwachende Druck weiter an, so gelangt er von der Einlaßöffnung 2 über den Kanal 8 in die erste Kammer 9, über die mindestens eine Strömungsbegrenzungs-Öffnung 19 in die zweite Kammer 13 und über die mindestens eine Öffnung 20 in die dritte Kammer 14 und beaufschlagt damit wiederum die Kolbenfläche des zweiten Kolbens 21, der entsprechend dem Druck gegen die Kraft der Federn 26 und 27 weiter in Richtung zur Auslaßöffnung 3 verschoben wird. Der erste Kolben 10 bleibt aufgrund des Druckes in der vierten Kammer 16 und aufgrund der Kraft der ersten Feder 18 in der Stellung, in der der Ventilsitz 11 geschlossen ist, während sich durch die weitere Bewegung des zweiten Kolbens 21 der zweite Ventilsitz 25 öffnet, so daß Druckluft in der dritten Kammer 14 in die Bohrung 24 gelangt. Sobald der zweite Kolben 21 soweit verschoben ist, daß die radiale Bohrung 24 mit der Öffnung 32 der Hülse 31 in Strömungsverbindung steht, fließt die Druckluft in den Teil der dritten Kammer 14, der unterhalb der Kolbenfläche des zweiten Kolbens 21 liegt. Dieser Teil sei mit Federkammer 38 bezeichnet. Von dort strömt die Druckluft über die Öffnung 33 der Hülse 31 zur Auslaßöffnung 3. Diese Strömung ist jedoch durch die Strömungsbegrenzungs-Öffnung 19 begrenzt und damit "kontrolliert", so daß der zu überwachende Druck an der Einlaßöffnung 2 langsam und gesteuert absinkt, so daß die Bremsen des Wagens nicht ansprechen.

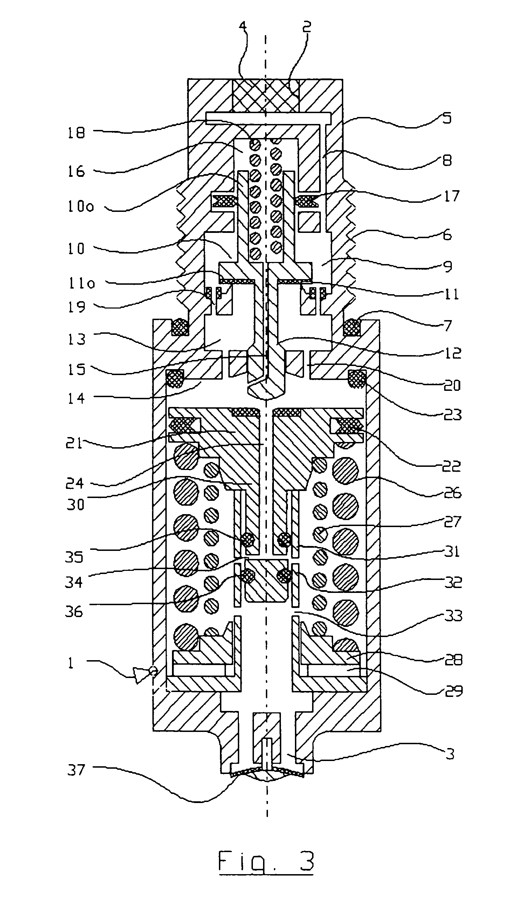

Diese Stellung ist in Fig. 3 dargestellt. Sobald der in der dritten Kammer 14 herrschende Druck, der auf die Kolbenfläche des zweiten Kolbens 21 wirkt, absinkt, so daß die durch den Druck erzeugte Kraft kleiner ist, als die Kraft der Federn 26 und 27, bewegt sich der zweite Kolben 21 wieder in entgegengesetzter Richtung, wodurch die Öffnung 32 durch die beiden Dichtungsringe 35 und 36 wieder verschlossen wird. Bei weiterem Druckabfall drückt der zweite Kolben 21 gegen die Kolbenstange 12 des ersten Kolbens 10, womit der Ventilsitz 25 geschlossen wird. Bei noch weiterem Druckabfall wird der erste Kolben 10 ebenfalls verschoben, womit der erste Ventilsitz 11 geöffnet wird und das Ventil wieder in der in Fig. 1 dargestellten Ausgangsstellung ist.

Das Ventil wird in der Praxis so eingestellt, daß die in Fig. 3 gezeigte Öffnungsstellung bei Überschreiten des zulässigen Füllstoßdruckes (von z.B. 5,4 bar) erreicht wird.

In der Praxis kann es vorkommen, daß die Dichtung 22 durch Verschleiß nicht mehr einwandfrei schließt oder daß der Ventilsitz 25 undicht wird. Deshalb ist eine Sicherheitsfunktion vorgesehen. Diese besteht zum einen aus der Dichtung 23, gegen die die Kolbenfläche des zweiten Kolbens 21 zur Anlage kommt. Bei Erreichen des Betriebsdruckes ist der zweite Kolben 21 aufgrund der Kraft der Federn 26 und 27 in der in Fig. 1 dargestellten oberen Grenzstellung, bei der die Kolbenfläche des Kolbens 21 gegen die Dichtung 23 anliegt. Damit kann auch bei defekter Dichtung 22 keine Druckluft aus dem oberhalb der Kolbenfläche des zweiten Kolbens 21 liegenden dritten Kammer 14 an dem zweiten Kolben 21 vorbei zur Auslaßöffnung 3 gelangen.

Für den Fall, daß der zweite Ventilsitz 25 undicht ist, dienen die beiden Dichtringe 35 und 36 an der Kolbenstange 30 in Zusammenwirken mit der Hülse 31 als Sicherung, da auch für diesen Fall die Druckluft nicht von der dritten Kammer 14 über die Bohrung 24 entweichen kann. Somit ist für beide Fälle sichergestellt, daß der zu überwachende Druck aufgrund von Undichtigkeiten des Ventiles nicht unter den Betriebsdruck (von beispielsweise 5,0 bar) absinken kann.

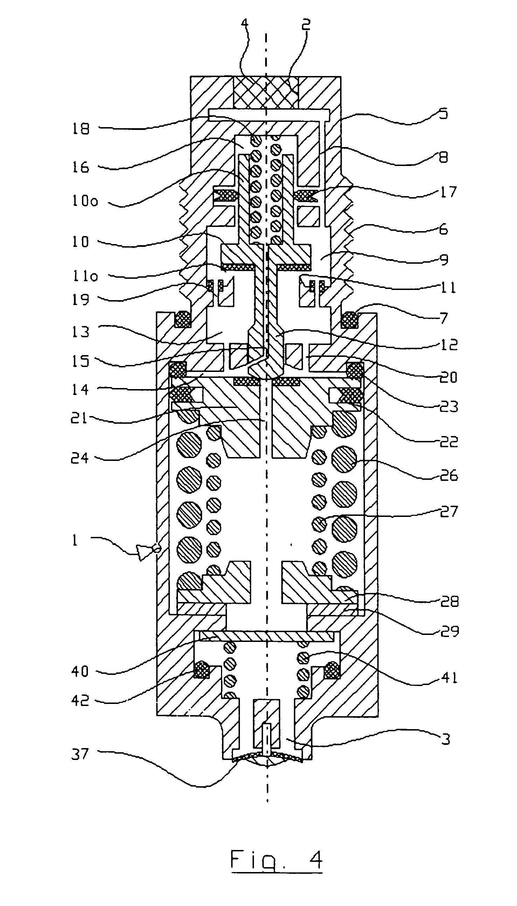

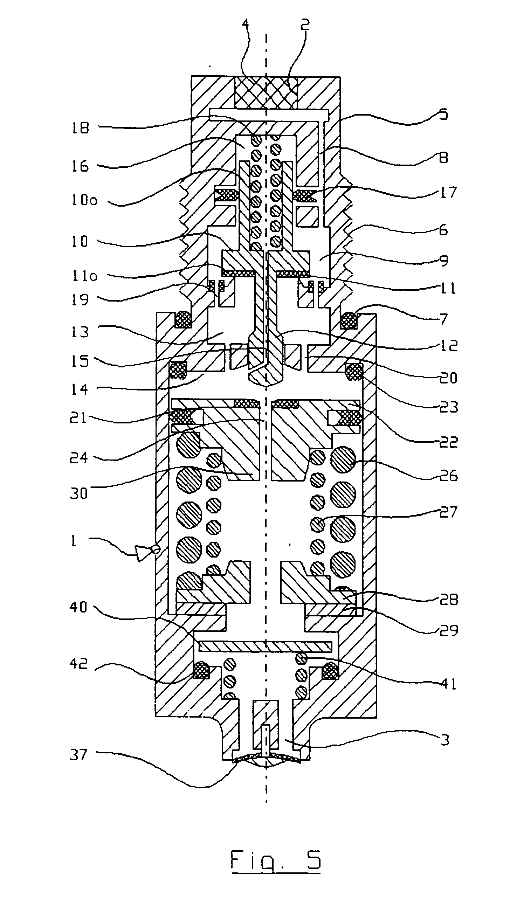

Die Fig. 4 und 5 zeigen ein zweites Ausführungsbeispiel der Erfindung, das sich vom ersten im wesentlichen dadurch unterscheidet, daß der zweite Kolben 21 keine Kolbenstange hat, so daß Überdruck aus der dritten Kammer 14 bei geöffnetem zweiten Ventilsitz 25 direkt über die Bohrung 24 in die Federkammer 38 und von dort zur Auslaßöffnung gelangen kann. Diese Überdruckablaßstellung ist in Fig. 5 gezeigt, wobei auch hier als Sicherung gegen einen Verschleiß der Dichtung 22 der O-Ring 23 vorgesehen ist, gegen den die Kolbenfläche des zweiten Kolbens 21 dichtend zur Anlage kommt, wenn der zweite Kolben 21 in seiner Schließstellung ist, die er beim eingestellten Regelbetriebsdruck (z.B. 5,0 bar) einnimmt.

Als Sicherung gegen ein Leck des zweiten Ventilsitzes 25 ist hier ein Sicherungsventil 40 vorgesehen, das vor der Auslaßöffnung 3 angeordnet ist. Im Falle eines Lecks des ersten Ventilsitzes 11 ist die Wirkung der Strömungsbegrenzungs-Öffnungen 19 nicht vorhanden und der Druck in der dritten Kammer 14 kann sehr schnell ansteigen. Hierdurch wird das Sicherheitsventil 40, das als Membran oder Platte ausgebildet ist, gegen die Kraft einer vierten Feder 41 in Richtung zur Auslaßöffnung bewegt und mit seiner der Auslaßöffnung 3 zugewandten Unterseite gegen einen Dichtring 42 zur Anlage kommen und damit die Auslaßöffnung 3 absperren. Dies geschieht nur dann, wenn der Druck in der dritten Kammer 14 einschließlich der Federkammer 38 einen vorbestimmten Wert überschritten hat, was bei normaler Funktion nicht auftreten kann, da bei einwandfreiem Ventilsitz 11 ein rascher Druckanstieg in der dritten Kammer 14 aufgrund der Strömungsbegrenzungs-Öffnungen 19 nicht auftreten kann. Auch bei einem überhöhten Druck in der ersten Kammer 9 baut sich aufgrund der Strömungsbegrenzungs-Öffnungen 19 in der zweiten Kammer 13 und der dritten Kammer 14 ein Druck nur langsam auf und kann über das geöffnete Sicherheitsventil 40 und die Auslaßöffnung 3 zur Atmosphäre abfließen. Somit ist auch bei defekten Ventilsitzen sichergestellt, daß ein Mindestbetriebsdruck stets aufrecht erhalten wird.

Weiter ist die Kraft der Federn 26 und 27 so abgestimmt, daß beim normalen Betriebsdruck (z.B. 5,0 bar) die Kolbenfläche des zweiten Kolbens 21 dichtend an dem O-Ring 23 anliegt, so daß der Betriebsdruck gehalten wird. Damit kann auch bei undichter Dichtung 22 der zu überwachende Druck gehalten werden und nicht über Leckstellen der Ventilsitze absinken.

## Patentansprüche

1. Überdruckablaßventil für druckluftgebremste Schienenfahrzeuge, mit einem Gehäuse (1), das eine Einlaßöffnung (2) und eine Auslaßöffnung (3) aufweist,
mit einem ersten verschiebbaren Kolben (10), der einen ersten Ventilsitz (11) zwischen einer ersten Kammer (9) und einer zweiten Kammer (13) aufweist, wobei
das Gehäuse (1) eine dritte Kammer (14) aufweist, in der ein zweiter beweglicher Kolben (21) angeordnet ist,
daß der zweite Kolben (21) eine mittige Bohrung (24) aufweist, die mit einer Kolbenstange (12) des ersten Kolbens (10) einen zweiten Ventilsitz (25) bildet,
daß die Bohrung (24) mit der Auslaßöffnung (3) in Strömungsverbindung steht,
daß der zweite Kolben (21) durch mindestens eine Feder (26, 27) in Schließrichtung des zweiten Ventilsitzes (25) vorgespannt ist,
daß die zweite Kammer (13) und die dritte Kammer (14) in Strömungsverbindung miteinander stehen, so daß eine Kolbenfläche des zweiten Kolbens (21) mit dem in der zweiten Kammer (13) und der dritten Kammer (14) herrschenden Druck beaufschlagt ist, **dadurch gekennzeichnet,**
**daß** der erste Ventilsitz (11) durch mindestens eine als Bypass wirkende kalibrierte Strömungsbegrenzungs-Öffnung (19) überbrückt ist.

2. Überdruckablaßventil nach Anspruch 1, **dadurch gekennzeichnet, daß** die den zweiten Kolben (21) beaufschlagende mindestens eine Feder (26, 27) in einem einstellbaren Federlager (28) abgestützt ist.

3. Überdruckablaßventil nach Anspruch 1 oder 2, **dadurch gekennzeichnet, daß** der erste Kolben (10) durch eine in einer vierten Kammer (16) angeordnete Feder (18) in Schließrichtung des ersten Ventilsitzes (11) vorgespannt ist, wobei die Kraft der den ersten Kolben (10) belastenden Feder (18) kleiner ist, als die Kraft der mindestens einen den zweiten Kolben (21) belastenden Feder (26, 27).

4. Überdruckablaßventil nach einem der Ansprüche 1 bis 3, **dadurch gekennzeichnet, daß** der erste Kolben (10) eine die dritte Kammer (14) und die vierte Kammer (16) verbindende Bohrung (15) aufweist.

5. Überdruckablaßventil nach einem der Ansprüche 1 bis 4, **dadurch gekennzeichnet, daß** die Kolbenfläche des zweiten Kolbens (21) durch die mindestens eine Feder (26, 27) gegen einen am einlaßseitigen Ende der vierten Kammer (14) angeordneten Dichtring (23) gedrückt ist.

6. Überdruckablaßventil nach einem der Ansprüche 1 bis 5, **dadurch gekennzeichnet, daß** der zweite Kolben (27) eine Kolbenstange (30) aufweist, durch die sich die Bohrung (24) des zweiten Kolbens (27) axial hindurch erstreckt und in einer radialen Bohrung (34) endet,
daß die Kolbenstange (30) des zweiten Kolbens (27) in einer Hülse (31) axial beweglich geführt ist,
daß die Hülse (31) mindestens zwei axial gegeneinander versetzt angeordnete radiale Öffnungen (32, 33) aufweist,
daß die Kolbenstange (30) des zweiten Kolbens (21) beidseitig der radialen Bohrung (34), je einen Dichtring (35, 36) aufweist, und
daß das Innere der Hülse (31) mit der Auslaßöffnung (3) des Gehäuses (1) in Strömungsverbindung steht.

7. Überdruckablaßventil nach einem der Ansprüche 1 bis 5, **dadurch gekennzeichnet, daß** vor der Auslaßöffnung (3) ein Sicherheits-Absperrventil (40, 41, 42) angeordnet ist, das die Auslaßöffnung (3) absperrt, wenn in der dritten Kammer (14) ein vorbestimmter Druck überschritten ist.

8. Überdruckablaßventil nach Anspruch 7, **dadurch gekennzeichnet, daß** das Sicherheitsabsperrventil eine gegen die Kraft einer Feder (41) in Richtung zu einem Dichtring (42) verschiebbare Platte (40) aufweist.

9. Überdruckablaßventil nach einem der Ansprüche 1 bis 8, **dadurch gekennzeichnet, daß** das Gehäuse (1) einen Kopf (5) mit Gewinde (6) aufweist, mittels dessen das Überdruckablaßventil in oder an eine Kammer, deren Druck zu überwachen ist, einschraubbar ist.

## Claims

1. Overpressure relief valve for rail vehicles with compressed-air brakes, comprising a housing (1) provided with an inlet opening (2) and an discharge opening (3),
comprising a first displaceable piston (10) including a first valve seat (11) between a first chamber (9) and a second chamber (13),
wherein said housing (1) includes a third chamber (14) in which a second mobile piston (21) is disposed,
said second piston (21) is provided with a central bore (24) cooperating with a piston rod (12) of said first piston (10) to form a second valve seat (25), said bore (24) being in flow communication with said discharge opening (3), said second piston (21) is biased by at least one spring (26, 27) in the closing direction of said second valve seat (25),
said second chamber (13) and said third chamber (14) are in flow communication with each other such that a piston surface of said second piston (21) is subjected to the pressure prevailing in said second chamber (13) and said third chamber (14),
**characterised in**
**that** said first valve seat (11) is bridged by at least one calibrated flow restriction opening (19) acting as by-pass.

2. Overpressure relief valve according to Claim 1, **characterised in that** said at least one spring (26, 27) acting upon said second piston (21) is supported in an adjustable spring seat (28).

3. Overpressure relief valve according to Claim 1 or 2, **characterised in that** said first piston (10) is biased by a spring (18) along the closing direction of said first valve seat (11), which spring is disposed in a fourth chamber (16), with the force of the spring (18) loading said first piston (10) being smaller than the force of said at least one spring (26, 27) loading said second piston (21).

4. Overpressure relief valve according to any of the Claims 1 to 3, **characterised in that** said first piston (10) comprises a bore connecting said third chamber (14) and said fourth chamber (16).

5. Overpressure relief valve according to any of the Claims 1 to 4, **characterised in that** the piston surface of said second piston (21) is pressed by said at least one spring (26, 27) against a sealing ring (23) disposed on the inlet-side end of said fourth chamber (14).

6. Overpressure relief valve according to any of the Claims 1 to 5, **characterised in that** said second piston (27) comprises a piston rod (30) through which said bore (24) of said second piston (27) is axially passed and terminates in a radial bore (34),
that said piston rod (30) of said second piston (27) is guided for axial movement in a sleeve (31),
that said sleeve (31) is provided with at least two radial openings (32, 33) axially offset relative to each other,
that said piston rod (30) of said second piston (21) comprises a respective sealing ring (35, 36) on either side of said radial bore (34), and
that the interior of said sleeve (31) is in flow communication with said discharge opening (3) of said housing (1).

7. Overpressure relief valve according to any of the Claims 1 to 5, **characterised in that** a safety shutoff valve (40, 41, 42) is disposed in front of said discharge opening (3), which shuts off said discharge opening (3) when the pressure in said third chamber (14) exceeds a predetermined level.

8. Overpressure relief valve according to Claim 7, **characterised in that** said safety shutoff valve is provided with a disk (40) displaceable against the force of a spring (41) in a direction towards a sealing ring (42).

9. Overpressure relief valve according to any of the Claims 1 to 8, **characterised in that** said housing (1) is provided with a head (5) with a thread (6) by means of which the overpressure relief valve can be screwed into or onto a chamber whose pressure is to be monitored.

## Revendications

1. Soupape de décharge de surpression pour véhicules ferroviaires aux freins pneumatiques, comprenant un boîtier (1) muni d'une ouverture d'entrée (2) et d'une ouverture de sortie (3),
comprenant un premier piston déplaçable (10) renfermant un premier siège de soupape (11) entre une première chambre (9) et une deuxième chambre (13),
dans lequel ledit boîtier (1) contient une troisième chambre (14), dans laquelle est disposé un deuxième piston mobile (21),
ledit deuxième piston (21) est muni d'un forage central (24) formant, ensemble avec une tige de piston (12) dudit premier piston (10), un deuxième siège de soupape (25),
audit forage (24) se trouvant en communication fluidique avec ladite ouverture de sortie (3),
dans lequel ledit deuxième piston (21) est mis en précontrainte par au moins un ressort (26, 27) en direction de fermeture dudit deuxième siège de soupape (25),
ladite deuxième chambre (13) et ladite troisième chambre (14) se trouvent en communication fluidique l'une avec l'autre de façon, qu'une surface de piston dudit deuxième piston (21) soit soumise à la pression régnant dans ladite deuxième chambre (13) et ladite troisième chambre (14),
**caractérisée en ce**
**que** ledit premier siège de soupape (11) est ponté par au moins une ouverture limiteur d'écoulement calibrée (19), qui agit en tant que dérivation du type by-pass.

2. Soupape de décharge de surpression selon la revendication 1, **caractérisée en ce que** ledit au moins seul ressort (26, 27) agissant sur ledit deuxième piston (21) st logé dans un siège de ressort ajustable (28).

3. Soupape de décharge de surpression selon la revendication 1 ou 2, **caractérisée en ce que** ledit premier piston (10) est mis en précontrainte moyennant un ressort (18) le long de la direction de fermeture dudit premier siège de soupape (11), ce ressort étant disposé dans une quatrième chambre (16), à l'effort dudit ressort (18), qui charge ledit premier piston (10), étant plus petit que l'effort dudit au moins seul ressort (26, 27), qui charge ledit deuxième piston (21).

4. Soupape de décharge de surpression selon une quelconque des revendications 1 à 3, **caractérisée en ce que** ledit premier piston (10) comprend un forage reliant ladite troisième chambre (14) et ladite quatrième chambre (16).

5. Soupape de décharge de surpression selon une quelconque des revendications 1 à 4, **caractérisée en ce que** la surface de piston dudit deuxième piston (21) est pressée par ledit au moins seul ressort (26, 27) contre un joint torique d'étanchéité (23) disposé à l'extrémité, du côté d'entrée, de ladite quatrième chambre (14).

6. Soupape de décharge de surpression selon une quelconque des revendications 1 à 5, **caractérisée en ce que** ledit deuxième piston (27) comprend une tige de piston (30), à travers laquelle ledit forage (24) dudit deuxième piston (27) est passée en sens axial et se termine en un bore radial (34),
**en ce que** ladite tige de piston (30) dudit deuxième piston (27) est guidé pour un mouvement axial dans une douille (31),
**en ce que** ladite douille (31) est munie d'au moins deux ouverture radiales (32, 33) en déport axial l'une par rapport à l'autre,
**en ce que** ladite tige de piston (30) dudit deuxième piston (21) comprend un joint torique d'étanchéité respectif (35, 36) des deux côtés dudit forage radial (34), et
**en ce que** l'intérieur de ladite douille (31) se trouve en communication fluidique avec ladite ouverture de sortie (3) dudit boîtier (1).

7. Soupape de décharge de surpression selon une quelconque des revendications 1 à 5, **caractérisée en ce qu'**une soupape d'arrêt de sûreté (40, 41, 42) est disposée devant ladite ouverture de sortie (3), qui arrête ladite ouverture de sortie (3), quand la pression dans ladite troisième chambre (14) dépasse un niveau prédéterminé.

8. Soupape de décharge de surpression selon la revendication 7, **caractérisée en ce que** ladite soupape d'arrêt de sûreté est munie d'un disque (40) déplaçable à l'encontre de l'effort d'un ressort (41) en un sens vers un joint torique d'étanchéité (42).

9. Soupape de décharge de surpression selon une quelconque des revendications 1 à 8, **caractérisée en ce que** ledit boîtier (1) est muni d'une tête (5) à un filet (6) servant à visser la soupape de décharge de surpression dans ou à une chambre dont la pression requiert le monitorage.
